(19) **Europäisches Patentamt European Patent Office Office européen des brevets**

(11) **EP 4 144 053 B1**

(12) # FASCICULE DE BREVET EUROPEEN

(45) Date de publication et mention de la délivrance du brevet:
**01.01.2025 Bulletin 2025/01**

(21) Numéro de dépôt: **21717468.9**

(22) Date de dépôt: **14.04.2021**

(51) Classification Internationale des Brevets (IPC):
***H04L 25/02*** *(2006.01)*

(52) Classification Coopérative des Brevets (CPC):
**H04L 25/0254**

(86) Numéro de dépôt international:
**PCT/EP2021/059711**

(87) Numéro de publication internationale:
**WO 2021/219383 (04.11.2021 Gazette 2021/44)**

(54) **PROCÉDÉ ET DISPOSITIF D'ESTIMATION DE CANAL, ET PROGRAMME D'ORDINATEUR ASSOCIÉ**

VERFAHREN UND VORRICHTUNG ZUR KANALSCHÄTZUNG UND ZUGEHÖRIGES COMPUTERPROGRAMM

METHOD AND DEVICE FOR ESTIMATING A CHANNEL, AND ASSOCIATED COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.04.2020 FR 2004203**

(43) Date de publication de la demande:
**08.03.2023 Bulletin 2023/10**

(73) Titulaire: **Fondation B-COM**
**35510 Cesson-Sévigné (FR)**

(72) Inventeurs:
• **LE MAGOAROU, Luc**
**35700 RENNES (FR)**
• **PAQUELET, Stéphane**
**35700 RENNES (FR)**

(74) Mandataire: **Jacobacci Coralis Harle**
**32, rue de l'Arcade**
**75008 Paris (FR)**

(56) Documents cités:
• BHATIA VANDANA ET AL: "Deep Learning Explorations in Wireless Channel Encoders", 2019 PHOTONICS & ELECTROMAGNETICS RESEARCH SYMPOSIUM - FALL (PIERS - FALL), IEEE, 17 December 2019 (2019-12-17), pages 2806 - 2811, XP033734706, DOI: 10.1109/PIERS-FALL48861.2019.9021659
• THAKKAR KARAN ET AL: "Deep Learning and Channel Estimation", 2020 6TH INTERNATIONAL CONFERENCE ON ADVANCED COMPUTING AND COMMUNICATION SYSTEMS (ICACCS), IEEE, 6 March 2020 (2020-03-06), pages 745 - 751, XP033761790, ISBN: 978-1-7281-5196-0, [retrieved on 20200420], DOI: 10.1109/ICACCS48705.2020.9074414

## Description

Domaine technique de l'invention

La présente invention concerne le domaine technique des télécommunications.

Elle concerne en particulier un procédé et un dispositif d'estimation de canal, ainsi qu'un programme d'ordinateur associé.

Etat de la technique

Afin d'optimiser la transmission de données dans un système de communication, il est connu de mettre en oeuvre un procédé d'estimation de canal visant à avoir une meilleure connaissance de l'état courant des canaux de communication utilisés par le système de communication.

Pour ce faire, on émet par exemple des séquences pilotes dans les différents canaux de communication. Après réception, ces séquences pilotes peuvent être traitées de manière à en déduire des valeurs respectivement représentatives de la transmission à travers les canaux de communication.

Les articles *"Deep Learning-based Channel Estimation for Beamspace mmWave Massive MIMO Systems"*, de Hengtao He, Chao-Kai Wen, Shi Jin et Geoffrey Ye Li, in IEEE Wireless Communication Letters, vol. 7, n° 5, pp. 852-855, 2018, "Deep Learning Explorations in Wireless Channel Encoders", de BhatiaVandana et al, 2019 PHOTONICS & ELECTROMAGNETICS RESEARCH SYMPOSIUM - FALL (PIERS - FALL), IEEE, 17 décembre 2019, et *"Deep Learning and Channel Estimation"*, de Thakkar Karan et al, 2020 6TH INTERNATIONAL CONFERENCE ON ADVANCED COMPUTING AND COMMUNICATION SYSTEMS (ICACCS), IEEE, 6 mars 2020 proposent à ce sujet d'utiliser des techniques d'apprentissage profond (en anglais *"deep learning"*) pour l'estimation de canal d'un système de communication de type MIMO (pour *"Multiple-Input Multiple-Output")*.

Présentation de l'invention

Dans ce contexte, la présente invention propose un procédé d'estimation de canal dans un système de communication comprenant une pluralité de canaux de communication, à partir d'une pluralité de valeurs bruitées respectivement représentatives de la transmission à travers lesdits canaux de communication, comprenant les étapes suivantes :

- sur la base d'un modèle physique du système de communication à au moins un paramètre, construction d'un ensemble de vecteurs associés à une pluralité de valeurs dudit au moins un paramètre, un vecteur associé à une valeur donnée dudit au moins un paramètre comprenant des valeurs respectivement représentatives de la transmission à travers lesdits canaux de communication selon ledit modèle physique pour ladite valeur donnée dudit au moins un paramètre ;

- initialisation, en fonction des vecteurs construits, de colonnes de coefficients de pondération définissant une partie au moins d'un réseau de neurones artificiels, ladite partie du réseau de neurones artificiels étant configurée pour déterminer la colonne de coefficients de pondération la mieux corrélée avec un vecteur reçu en entrée du réseau de neurones artificiels et pour produire en sortie un vecteur colinéaire à la colonne la mieux corrélée ;

- application, en entrée de ladite partie du réseau de neurones artificiels, d'un vecteur déterminé en fonction desdites valeurs bruitées de manière à produire en sortie du réseau de neurones artificiels un vecteur comprenant des valeurs estimées respectivement représentatives de la transmission à travers lesdits canaux de communication ;

- mise à jour des coefficients de pondération de ladite partie du réseau de neurones artificiels par une technique d'apprentissage diminuant une fonction de coût croissante en fonction d'une distance entre le vecteur appliqué en entrée du réseau de neurones artificiels et le vecteur produit en sortie du réseau de neurones artificiels.

L'utilisation d'un réseau de neurones artificiels dont les coefficients de pondération (ou poids) sont définis au moyen d'un modèle physique du système de communication permet d'obtenir une estimation de canal satisfaisante même sans phase d'apprentissage préalable. La mise à jour des coefficients de pondération au cours du fonctionnement permet en outre d'améliorer progressivement l'estimation réalisée.

D'autres caractéristiques non limitatives et avantageuses du procédé conforme à l'invention, prises individuellement ou selon toutes les combinaisons techniquement possibles, sont les suivantes :

- le procédé comprend une pluralité d'étapes successives d'application de vecteur en entrée de ladite partie de réseau de neurones artificiels et, pour chaque étape successive d'application, une étape correspondante de mise à jour des coefficients de pondération par ladite technique d'apprentissage ;

- à l'étape d'initialisation, chaque colonne de coefficients de pondération est initialisée avec un vecteur produit d'une matrice de transformation d'un domaine des canaux de communication (ou domaine défini par des antennes du système de communication) à un domaine angulaire dual, et d'un vecteur dudit ensemble ;

- le vecteur appliqué en entrée est obtenu par normalisation d'un vecteur comprenant lesdites valeurs bruitées et multiplication de la matrice de transformation par le vecteur normalisé ;

- à l'étape d'initialisation, chaque colonne de coefficients de pondération est initialisée avec un vecteur dudit ensemble et/ou le vecteur appliqué en entrée comprend lesdites valeurs bruitées ;
- le réseau de neurones artificiels comprend au moins une autre partie configurée pour recevoir en entrée un vecteur obtenu par différence entre le vecteur appliqué en entrée de ladite partie du réseau de neurones artificiels et le vecteur produit en sortie de ladite partie du réseau de neurones artificiels ;
- cette autre partie du réseau de neurones artificiels comprend des colonnes d'autres coefficients de pondération et étant configurée pour déterminer la colonne desdits autres coefficients de pondération la mieux corrélée avec le vecteur reçu en entrée de cette autre partie du réseau de neurones artificiels et pour produire un vecteur colinéaire à la colonne desdits autres coefficients la mieux corrélée ;
- ledit modèle physique est basé sur une pluralité de paramètres ;
- l'ensemble de vecteurs construits comprend des vecteurs respectivement associés à une pluralité de multiplets distincts de valeurs desdits paramètres ;
- le paramètre est un angle relativement à un réseau d'antennes du système de communication ;
- les vecteurs construits comprennent au moins une valeur représentative de la transmission et obtenue en fonction d'une valeur dudit angle ;
- lesdites valeurs bruitées sont obtenues par réception de séquences pilotes via les canaux de communication et traitement desdites séquences pilotes reçues.

L'invention propose également un dispositif d'estimation de canal pour un système de communication comprenant une pluralité de canaux de communication, comprenant :

- un module de construction conçu pour construire, sur la base d'un modèle physique du système de communication à au moins un paramètre, un ensemble de vecteurs associés à une pluralité de valeurs dudit au moins un paramètre de telle sorte qu'un vecteur associé à une valeur donnée dudit au moins un paramètre comprenne des valeurs respectivement représentatives de la transmission à travers lesdits canaux de communication selon ledit modèle physique cour ladite valeur donnée dudit au moins un paramètre ;
- un module d'initialisation conçu pour initialiser, en fonction des vecteurs construits, des colonnes de coefficients de pondération définissant une partie au moins d'un réseau de neurones artificiels, ladite partie du réseau de neurones artificiels étant configurée pour déterminer la colonne de coefficients de pondération la mieux corrélée avec un vecteur reçu en entrée du réseau de neurones artificiels et pour produire en sortie un vecteur colinéaire à la colonne la mieux corrélée ;

- un module d'application conçu pour appliquer, en entrée de ladite partie du réseau de neurones artificiels, un vecteur déterminé en fonction de valeurs bruitées respectivement représentatives de la transmission à travers lesdits canaux de communication, de manière à produire en sortie du réseau de neurones artificiels un vecteur comprenant des valeurs estimées respectivement représentatives de la transmission à travers lesdits canaux de communication ;
- un module de mise à jour des coefficients de pondération de ladite partie du réseau de neurones artificiels par une technique d'apprentissage diminuant une fonction de coût croissante en fonction d'une distance entre le vecteur appliqué en entrée du réseau de neurones artificiels et le vecteur produit en sortie du réseau de neurones artificiels.

Ce dispositif d'estimation de canal est par exemple inclus dans une unité de communication telle qu'une station de base d'un réseau de téléphonie mobile, comme décrit dans la suite.

L'invention propose enfin un programme d'ordinateur comprenant des instructions exécutables par un processeur (par exemple un processeur de l'unité de communication susmentionnée) et conçues pour mettre en oeuvre un procédé tel que proposé ci-dessus lorsque ces instructions sont exécutées par le processeur.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

Description détaillée de l'invention

De plus, diverses autres caractéristiques de l'invention ressortent de la description annexée effectuée en référence aux dessins qui illustrent des formes, non limitatives, de réalisation de l'invention et où :

- la figure 1 représente schématiquement un système de communication ;
- la figure 2 illustre sous forme fonctionnelle un dispositif d'estimation de canal selon un exemple de mise en oeuvre de l'invention ;
- la figure 3 représente schématiquement un réseau de neurones artificiels utilisable dans le dispositif d'estimation de canal de la figure 2 ;
- la figure 4 est un logigramme représentant un exemple de procédé d'estimation de canal conforme à l'invention ;
- la figure 5 représente schématiquement une variante envisageable pour le réseau de neurones artificiels susmentionné ; et
- la figure 6 représente de manière détaillée une partie du réseau de neurones artificiels de la figure 5.

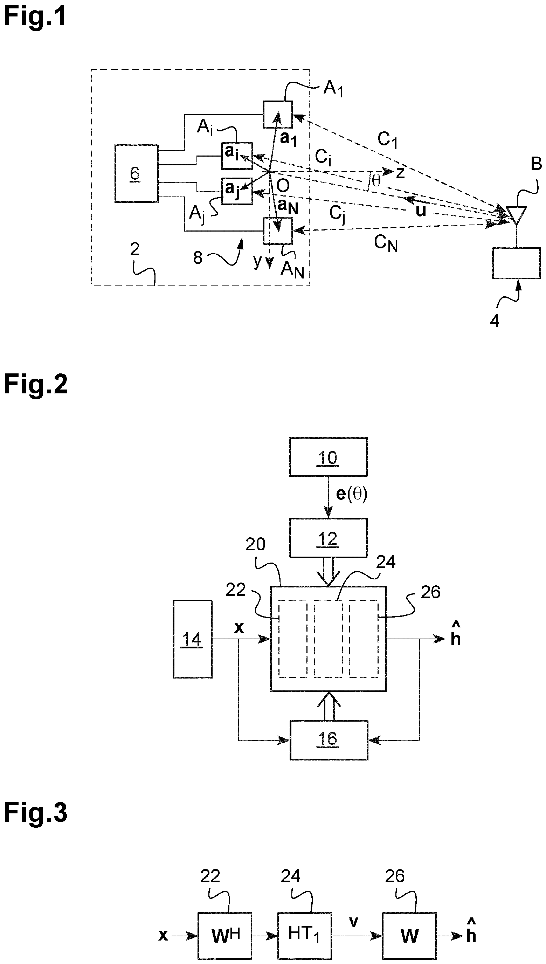

La figure 1 représente schématiquement un système de communication dans lequel peut être mise en oeuvre l'invention.

Ce système de communication comprend une unité de communication 2 et un dispositif électronique 4.

L'unité de communication 2 comprend une unité de commande 6 et une pluralité d'antennes $A_1$, $A_i$, $A_j$, $A_N$ formant un réseau d'antennes 8 de centre de masse (en anglais : *"centroid"*) O. Le nombre d'antennes $A_1$, $A_i$, $A_j$, $A_N$ du réseau d'antennes 8 est ici égal à N.

L'unité de commande 6 est reliée à chacune des antennes $A_1$, $A_i$, $A_j$, $A_N$ de manière à recevoir des signaux représentatifs de signaux électromagnétiques reçus par chacune des antennes $A_1$, $A_i$, $A_j$, $A_N$. L'unité de commande 6 peut également commander l'émission de signaux électromagnétiques par chacune des antennes $A_1$, $A_i$, $A_j$, $A_N$.

Le dispositif électronique 4 comporte une antenne B, au moyen de laquelle le dispositif électronique 4 peut émettre des signaux électromagnétiques (à destination notamment de l'unité de communication 2), notamment des séquences pilotes comme décrit plus loin.

Le système de communication pourrait comprendre d'autres dispositifs électroniques munis d'au moins une antenne et ainsi aptes à échanger des signaux électromagnétiques avec l'unité de communication 2. On se retrouve dans ce cas dans une situation de type système MU-MIMO (pour *"Multi User - Multiple-Input Multiple-Output"*). Un seul dispositif électronique 4 est toutefois représenté en figure 1 pour simplifier le présent exposé.

En pratique, l'unité de communication 2 est par exemple une station de base d'un réseau de téléphonie mobile. Le dispositif électronique 4 est alors par exemple dans ce cas un terminal mobile.

Le système de communication de la figure 1 comprend une pluralité de canaux de communication $C_1$, $C_i$, $C_j$, $C_N$, ici entre chacune des antennes $A_1$, $A_i$, $A_j$, $A_N$ de l'unité de communication 2 et l'antenne B du dispositif électronique 4.

La figure 2 représente sous forme fonctionnelle une partie de l'unité de commande 6 qui forme un dispositif d'estimation de canal conforme à un exemple de mise en oeuvre de l'invention.

Chacun des différents modules décrits ci-dessous est par exemple réalisé au moyen d'instructions de programme d'ordinateur conçues pour mettre en oeuvre le module concerné lorsque ces instructions sont exécutées par un processeur de l'unité de commande 6.

Le dispositif d'estimation de canal comprend un module de construction 10 qui utilise un modèle physique du système de communication à au moins un paramètre.

Ce modèle physique modélise ici la transmission des signaux électromagnétiques de l'antenne B du dispositif électronique 4 au réseau d'antennes 8 par une onde plane propagée (en ligne directe) selon une direction reliant l'antenne B et le centre de masse O, ou direction d'arrivée, orientée selon un vecteur unitaire u.

On considère par ailleurs que le réseau d'antennes 8 est un réseau linéaire uniforme (ou ULA pour *"Uniform Linear Array"*).

Le module de construction 10 peut ainsi déterminer, sur la base de ce modèle physique, des valeurs respectivement représentatives de la transmission à travers les canaux de communication $C_1$, $C_i$, $C_j$, $C_N$.

Dans le cas du modèle envisagé ci-dessus, la transmission à travers chaque canal $C_i$ peut être représentée par la valeur de canal $c_i$ définie comme suit :

$$c_i = g_i e^{-j\frac{2\pi}{\lambda}\mathbf{a_i}.\mathbf{u}} = g_i e^{-j\frac{2\pi}{\lambda}(\mathbf{a_i})_y.\sin\theta}$$

où $g_i$ est le gain complexe de l'antenne $A_i$, $\lambda$ est la longueur d'onde de l'onde électromagnétique utilisée, $\mathbf{a_i}$ est le vecteur désignant la position de l'antenne $A_i$ par rapport au centre de masse O, $(\mathbf{a_i})_y$ est la composante du vecteur $\mathbf{a_i}$ selon l'axe y (axe vertical sur la figure 1) et $\theta$ étant l'angle d'azimut formé, dans le plan (O,z,y), par la direction d'arrivée et l'axe z.

Dans le cas du réseau linéaire uniforme envisagé ici, on a : $g_i = 1$ pour i allant de 1 à N et on utilise donc l'angle d'azimut $\theta$ comme paramètre du modèle physique.

Sur la base de ce modèle physique, le module de construction 10 peut construire un ensemble de vecteurs $\mathbf{e}(\theta)$ respectivement associés à une pluralité de valeurs du paramètre, un vecteur $\mathbf{e}(\theta)$ associé à une valeur $\theta$ donnée comprenant les valeurs $c_i(\theta)$ respectivement représentatives de la transmission à travers lesdits canaux de communication Ci selon ledit modèle physique pour cette valeur $\theta$ donnée du paramètre : $\mathbf{e}(\theta) = (c_1(\theta)$, $c_i(\theta)$, $c_j(\theta)$, ..., $c_N(\theta))^T$, où $^T$ est l'opérateur de transposition. On note dans la suite L le nombre de valeurs différentes considérées du paramètre (ou, lorsque plusieurs paramètres sont utilisés, le nombre de multiplets de valeurs considérés.) Ce nombre L correspond donc également au nombre de vecteurs $\mathbf{e}(\theta)$ dans l'ensemble de vecteurs. Le nombre L est par exemple compris entre 10.N et 100.N vecteurs (N étant comme précédemment le nombre d'antennes dans le réseau d'antennes 8), ou, en pratique, entre 500 et 10 000.

Le dispositif d'estimation de canal comprend également un module d'initialisation 12 conçu pour initialiser des coefficients de pondération (ou poids) d'un réseau de neurones artificiels 20 en fonction des vecteurs $\mathbf{e}(\theta)$ construits par le module de construction.

Précisément, le réseau de neurones artificiels 20 est en partie défini par des colonnes $\mathbf{w_i}$ de coefficients de pondération, et chaque colonne $\mathbf{w_i}$ de coefficients de pondération est initialisée sur la base d'un vecteur construit $\mathbf{e}(\theta)$ (associé à une valeur $\theta$ particulière du paramètre du modèle physique, comme déjà indiqué). On décrit dans la suite différentes possibilités pour l'initialisation d'une colonne $\mathbf{w_i}$ de coefficients de pondération sur la base d'un vecteur construit $\mathbf{e}(\theta)$.

Le dispositif d'estimation de canal 20 comprend aussi le réseau de neurones artificiels 20 qui vient d'être mentionné.

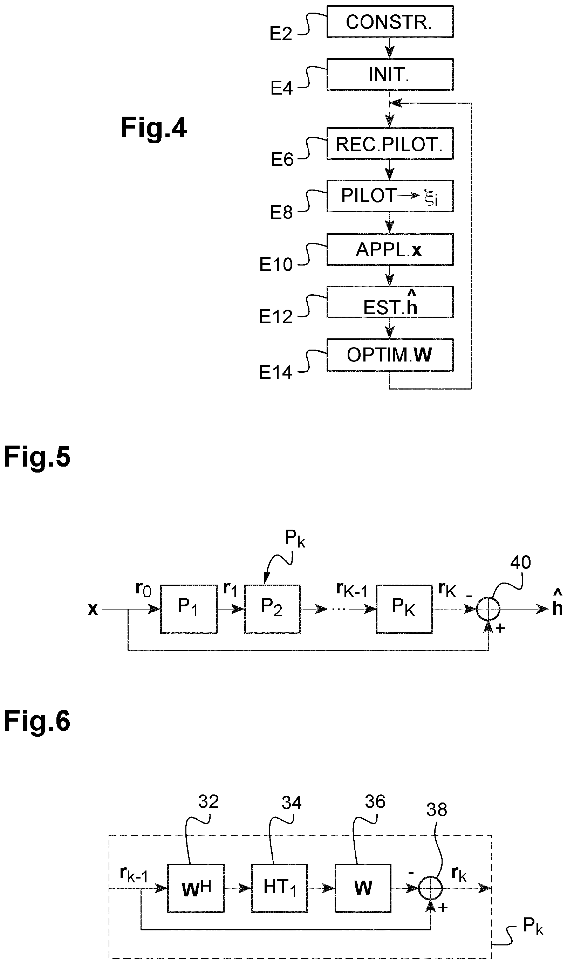

Ce réseau de neurones artificiels 20 (ou une partie au moins de celui-ci dans certaines variantes envisageables, comme décrit plus bas en référence aux figures 5 et 6) est configuré pour déterminer la colonne $\gamma$ de coefficients de pondération la mieux corrélée avec un vecteur **x** reçu en entrée du réseau de neurones artificiels 20 et pour produire en sortie un vecteur $\hat{h}$ colinéaire à la colonne la mieux corrélée. Autrement dit, on a :

$$\gamma = \mathrm{argmax_{wi}} \; |w_i{}^H x|$$

$$\hat{h} = \gamma\gamma^H x$$

où $^H$ est l'opérateur *"transposé conjugué"* et $|z|$ est le module du nombre complexe z (en assimilant la colonne $w_i$ de coefficients de pondération au vecteur formé des éléments de cette colonne $w_i$).

Pour ce faire, le réseau de neurones artificiels 20 est par exemple un auto-encodeur k-parcimonieux tel que décrit dans l'article *"K-sparse autoencoders"*, de A. Makhzani et B.Frey, arXiv preprint, arXiv :1312.5663, 2013, ici avec un paramètre de parcimonie k égal à 1.

La figure 3 représente schématiquement un réseau de neurones artificiels de ce type.

Sur cette figure, **W** représente une matrice formée par les colonnes $w_i$ de coefficients de pondération

$$(W \in \mathbb{C}^{NxL}).$$

Le réseau de neurones artificiels 20 comporte ici une première couche 22 qui applique au vecteur **x** reçu en entrée du réseau de neurones artificiels 20 une multiplication (à gauche) par la matrice $W^H$. Autrement dit, la première couche 22 produit en sortie le vecteur (à L éléments) : $W^H x$.

Selon une possibilité de réalisation du réseau de neurones artificiels 20, la première couche 22 peut en outre ajouter (au résultat de la multiplication par la matrice $W^H$) un vecteur $b_1$ à L éléments. Dans ce cas, la première couche 22 produit en sortie le vecteur (à L éléments) : $W^H x + b_1$. En pratique, le vecteur $b_1$ est par exemple initialisé (ici par le module d'initialisation 12) en mettant tous ses éléments à la valeur 0 (valeur nulle) ; les éléments du vecteur $b_1$ sont ensuite susceptibles d'évoluer lors des phases d'apprentissage par le module de mise à jour 16 comme décrit plus loin.

Le réseau de neurones artificiels 20 comporte en outre une seconde couche 24 qui conserve uniquement l'élément (ou coefficient) de plus grand module dans le vecteur reçu de la première couche 22 (c'est-à-dire dans le vecteur $W^H x$) et annule tous les autres éléments de ce même vecteur. L'opérateur mis en oeuvre dans cette seconde couche 24 est généralement dénommé $HT_1$ (pour *"Hard Thresholding"* avec parcimonie 1).

La seconde couche 24 produit ainsi en sortie un vecteur **v** à L éléments avec L-1 éléments nuls et un élément correspondant à l'élément de module maximal dans le vecteur reçu de la première couche 22.

Le réseau de neurones artificiels 20 comporte enfin une troisième couche 26 qui applique au vecteur **v** reçu de la seconde couche 24 une multiplication (à gauche) par la matrice **W**. Autrement dit, la troisième couche 26 produit en sortie le vecteur **Wv**.

Dans l'exemple décrit ici, la sortie de la troisième couche 26 correspond à la sortie du réseau de neurones artificiels 20 et on a donc : $\hat{h} = Wv$.

Selon une possibilité de réalisation du réseau de neurones artificiels 20, la troisième couche 26 peut en outre ajouter (au résultat de la multiplication par la matrice **W**) un vecteur $b_2$ à N éléments. Dans ce cas, la troisième couche 26 produit en sortie le vecteur (à N éléments) : $Wv + b_2$. En pratique, le vecteur $b_2$ est par exemple initialisé (ici par le module d'initialisation 12) en mettant tous ses éléments à la valeur 0 (valeur nulle) ; les éléments du vecteur $b_2$ sont ensuite susceptibles d'évoluer lors des phases d'apprentissage par le module de mise à jour 16 comme décrit plus loin.

En résumé, sur la base d'un vecteur **x** reçu en entrée, le réseau de neurones artificiels 20 produit ici en sortie le vecteur $\hat{h} = W HT_1(W^H x)$ (ce qui est une expression de $\hat{h}$ équivalente à celle donnée ci-dessus).

Pour la mise en oeuvre pratique de ce réseau de neurones artificiels 20 dans un calculateur (par exemple un ordinateur) manipulant seulement des valeurs réelles, les vecteurs à valeurs complexes mentionnés ci-dessus pourront être transformés en vecteurs à valeurs réelles comprenant deux éléments (partie réelle et partie imaginaire) pour chaque élément du vecteur à valeurs complexes concerné. De même, on utilisera la représentation réelle pour les matrices. On pourra par exemple se référer à ce sujet à l'article *"The complex backpropagation algorithm"*, de Leung, H. et Haykin, S. in IEEE Transactions on signal processing, 39(9), 2101-2104 (1991).

Le dispositif d'estimation de canal comprend en outre un module d'application 14 conçu pour appliquer, en entrée du réseau de neurones artificiels 20, un vecteur **x** déterminé en fonction de valeurs bruitées $\xi_i$ respectivement représentatives de la transmission à travers les différents canaux de communication $C_1$, $C_i$, $C_j$, $C_N$. Comme expliqué plus loin, ces valeurs bruitées $\xi_i$ sont par exemple obtenues par réception et traitement d'au moins une séquence pilote émise par le dispositif électronique 4.

Le réseau de neurones artificiels 20 produit alors en sortie le vecteur $\hat{h}$ qui comprend donc des valeurs estimées respectivement représentatives de la transmission à travers les canaux de communication $C_1$, $C_i$, $C_j$, $C_N$.

Le dispositif d'estimation de canal comprend enfin un module de mise à jour 16 des coefficients de pondération (c'est-à-dire des éléments des colonnes $w_i$ de coefficients de pondération, ou encore des coefficients de la matrice **W**) par une technique d'apprentissage diminuant une fonction de coût f croissante en fonction d'une distance d entre le vecteur **x** appliqué en entrée du réseau de neurones artificiels 20 et le vecteur $\hat{\mathbf{h}}$ produit en sortie du réseau de neurones artificiels 20. Si des vecteurs $\mathbf{b_1}$ et/ou $\mathbf{b_2}$ sont utilisés au sein du réseau de neurones artificiels 20 comme mentionné ci-dessus, les éléments de ces vecteurs $\mathbf{b_1}$, $\mathbf{b_2}$ peuvent simultanément être mis à jour par le module de mise à jour 16 par cette technique d'apprentissage.

On utilise par exemple la distance d = $\|\mathbf{x} - \hat{\mathbf{h}}\|_2$, où $\|\mathbf{z}\|_2$ est la norme 2 (ou norme euclidienne) du vecteur **z** :

$$\left\|\mathbf{z}\right\|_2 = \sqrt{\sum_{i=1}^{N} |z_i|^2}$$

avec $\mathbf{z} = (z_1, ..., z_i, ... z_N)^\mathsf{T}$.

La fonction de coût f est par exemple f(d) = $0{,}5.d^2$.

La technique d'apprentissage permet de modifier les coefficients (ou poids) du réseau de neurones artificiels 20, c'est-à-dire ici en pratique les coefficients de la matrice **W,** afin de diminuer la fonction de coût f(d). Il s'agit donc d'une technique d'optimisation. On peut utiliser par exemple une technique dite de *"descente de gradient par mini-lots"* (ou *"mini-batch gradient descent"*) telle que décrite dans l'article *"Large-scale machine learning with stochastic gradient descent"*, de L. Bottou, in Proceedings of COMPSTAT'2010, Springer 2010, pp. 177-186.

La figure 4 est un logigramme qui représente un exemple de procédé d'estimation pouvant être mis en oeuvre dans le contexte qui vient d'être décrit. Ce procédé est donc ici mis en oeuvre par l'unité de communication 2.

Ce procédé débute par une étape E2 de construction d'un ensemble de vecteurs $\mathbf{e}(\theta)$ associés respectivement à une pluralité de valeurs $\theta$ du paramètre sur la base du modèle physique du système de communication employant ce paramètre.

Comme déjà indiqué, un vecteur $\mathbf{e}(\theta)$ associé à une valeur donnée $\theta$ du paramètre comprend des valeurs $c_1(\theta)$, $c_i(\theta)$, $c_j(\theta)$, $c_N(\theta)$ respectivement représentatives de la transmission à travers les canaux de communication $C_1$, $C_i$, $C_j$, $C_N$, valeurs représentatives $c_1(\theta)$, $c_i(\theta)$, $c_j(\theta)$, $c_N(\theta)$ qui sont calculées selon le modèle physique pour la valeur donnée $\theta$ du paramètre.

Lorsque le modèle physique emploie plusieurs paramètres, l'ensemble de vecteurs comprend des vecteurs associés à une pluralité de multiplets distincts de valeurs de ces paramètres, chaque vecteur comprenant là encore des valeurs respectivement représentatives de la transmission à travers les canaux de communication $C_1$, $C_i$, $C_j$, $C_N$, qui sont calculées selon le modèle physique pour un multiplet donné de valeurs des paramètres.

L'étape de construction E2 est ici mise en oeuvre par le module de construction 10.

Le procédé se poursuit par une étape E4 d'initialisation, en fonction des vecteurs $\mathbf{e}(\theta)$ construits à l'étape E2, des colonnes $w_i$ de coefficients de pondération définissant en partie le réseau de neurones artificiels 20 (ces colonnes $w_i$ de coefficients de pondération correspondant ici aux colonnes de la matrice **W** du réseau de neurones artificiels 20). L'étape E4 est ici mise en oeuvre par le module d'initialisation 12.

Selon un premier mode de réalisation, chaque colonne $w_i$ est initialisée au moyen d'un vecteur $\mathbf{e}(\theta_i)$ de l'ensemble des vecteurs construits (ce vecteur $\mathbf{e}(\theta_i)$ étant associé à une valeur particulière $\theta_i$ du paramètre du modèle physique).

Selon un second mode de réalisation, chaque vecteur $\mathbf{e}(\theta)$ de l'ensemble de vecteurs construits est transposé dans le domaine angulaire dual avant initialisation d'une colonne $w_i$ de coefficients de pondération.

Dans ce cas, chaque colonne $w_i$ est initialisée au moyen du vecteur $\mathbf{F}\mathbf{e}(\theta_i)$, où $\mathbf{e}(\theta_i)$ est un vecteur de l'ensemble des vecteurs construits associé à une valeur particulière $\theta_i$ du paramètre du modèle physique et $\mathbf{F}$ est une matrice de transformation du domaine des canaux de communication (c'est-à-dire ici du domaine des antennes) au domaine angulaire dual $\left(\mathbf{F} \in \mathbb{C}^{N \times N}\right)$. Autrement dit, la matrice $\mathbf{F}$ permet de transformer un vecteur comprenant des valeurs respectivement représentatives de la transmission via les différentes antennes $A_1$, $A_i$, $A_j$, $A_N$ du réseau d'antennes 8 (c'est-à-dire à travers les différents canaux de communication $C_1$, $C_i$, $C_j$, $C_N$) en un vecteur comprenant des valeurs respectivement représentatives de la transmission pour différents angles relativement au réseau d'antennes 8.

Dans le cas présent où le réseau d'antennes 8 est un réseau linéaire uniforme, la matrice $\mathbf{F}$ est une matrice de transformation de Fourier discrète (en anglais *"discrète Fourier transform matrix"*), ou matrice de Vandermonde-Fourier. La matrice $\mathbf{F}$ correspond en effet ici à une base de vecteurs de visée associés au réseau d'antennes 8. Un coefficient $f_{p,q}$ en ligne p et colonne q dans la matrice F vaut ainsi ici :

$$f_{p,q} = \frac{1}{\sqrt{N}} e^{-j2\pi.\frac{(p-1)(q-1)}{N}}$$

Dans le cas où le réseau de neurones artificiels 20 utilise des vecteurs $\mathbf{b_1}$ et/ou $\mathbf{b_2}$ comme mentionné plus haut, ces vecteurs $\mathbf{b_1}$, $\mathbf{b_2}$ sont chacun initialisés à l'étape E4, par exemple en mettant leurs éléments à la valeur 0 (valeur nulle).

Les étapes E2 et E4 qui viennent d'être décrites peuvent en pratique être mises en oeuvre une seule fois, par exemple à l'initialisation ou à la mise en service de l'unité de communication 6.

Les étapes qui suivent sont au contraire répétées et permettent l'évolution progressive du réseau de neurones artificiels 20, comme décrit ci-après.

Le procédé se poursuit ainsi par une étape E6 de réception d'une séquence pilote en provenance du dispositif électronique 4. Lorsque le système de communication comprend plusieurs dispositifs électroniques (tels que le dispositif électronique 4) comme envisagé ci-dessus, plusieurs séquences pilotes orthogonales entre elles peuvent être simultanément transmises à l'unité de communication 2, l'unité de communication 2 pouvant alors séparer les différentes séquences pilotes reçues au sein des signaux reçus (grâce au caractère orthogonal susmentionné) et traiter séparément chaque séquence pilote reçue comme décrit à présent pour une séquence pilote.

La séquence pilote est reçue par l'unité de communication 2 via chacune des antennes $A_1$, $A_i$, $A_j$, $A_N$ du réseau d'antennes 8 de sorte que l'unité de commande 6 peut déterminer à l'étape E8 des valeurs bruitées $\xi_1$, $\xi_i$, $\xi_j$, $\xi_N$ respectivement représentatives de la transmission à travers les différents canaux de communication $C_1$, $C_i$, $C_j$, $C_N$ (la détermination d'une valeur bruitée $\xi_i$ représentative de la transmission à travers un canal de communication $C_i$ étant réalisée par traitement de la séquence pilote reçue via l'antenne $A_i$ définissant ce canal de communication $C_i$).

Le procédé se poursuit alors par une étape E10 d'application, en entrée du réseau de neurones artificiels 20, d'un vecteur **x** déterminé en fonction des valeurs bruitées $\xi_1$, $\xi_i$, $\xi_j$, $\xi_N$. Cette étape E10 est ici mise en oeuvre par le module d'application 14.

Selon le premier mode de réalisation envisagé (déjà mentionné ci-dessus), le vecteur **x** est formé desdites valeurs bruitées $\xi_1$, $\xi_i$, $\xi_j$, $\xi_N$ (c'est-à-dire que chaque coefficient ou élément $x_i$ du vecteur **x** est l'une des valeurs bruitées $\xi_1$, $\xi_i$, $\xi_j$, $\xi_N$). On a par exemple dans ce cas : $x_i = \xi_i$.

Selon le second mode de réalisation envisagé (déjà mentionné ci-dessus), le vecteur **x** est obtenu par normalisation et application d'une transformation des valeurs bruitées $\xi_1$, $\xi_i$, $\xi_j$, $\xi_N$ respectivement associées aux antennes $A_1$, $A_i$, $A_j$, $A_N$ du réseau d'antennes 8 dans le domaine angulaire dual (par multiplication par la matrice de transformation **F** déjà mentionnée). Autrement dit :

$$\mathbf{x} = \frac{1}{\sqrt{\sum_{i=1}^{N}|\xi_i|^2}} . \mathbf{F} \begin{pmatrix} \xi_1 \\ \vdots \\ \xi_i \\ \vdots \\ \xi_j \\ \vdots \\ \xi_N \end{pmatrix}$$

où **F** est la matrice de transformation déjà mentionnée.

Le réseau de neurones artificiels 20 produit alors en sortie à l'étape E12 un vecteur $\hat{h}$ comprenant les valeurs estimées recherchées, respectivement représentatives de la transmission à travers les canaux de communication $C_1$, $C_i$, $C_j$, $C_N$.

Ces valeurs estimées peuvent être utilisées par l'unité de communication 6 pour configurer des circuits de traitement des signaux électromagnétiques reçus par les antennes $A_1$, $A_i$, $A_j$, $A_N$ du réseau d'antennes 8 (ces circuits de traitement étant inclus dans l'unité de communication 6 mais non représenté pour simplifier l'exposé). Ces valeurs estimées peuvent également être utilisées pour configurer des précodeurs conçus pour effectuer un précodage des signaux électromagnétiques à émettre au moyen des antennes $A_1$, $A_i$, $A_j$, $A_N$ du réseau d'antennes 8 (lorsque ces antennes fonctionnent également en émission comme mentionné plus haut).

On peut remarquer que, dans le second mode de réalisation envisagé (mentionné ci-dessus), la transformation du domaine des antennes au domaine angulaire dual (c'est-à-dire la multiplication par la matrice **F**) est effectuée dans l'étape d'initialisation E4 et dans l'étape d'application E10, si bien que l'on retrouve bien en sortie du réseau de neurones artificiels 20 l'estimation $\hat{h}$ recherchée (du fait que $\mathbf{F}^H\mathbf{F} = \mathbf{Id}$, où **Id** est la matrice identité), sans avoir à procéder à une transformation inverse.

Le procédé comprend alors une étape E14 de mise à jour des coefficients de pondération du réseau de neurones artificiels 20 (c'est-à-dire ici des éléments de la matrice **W**) au moyen d'une technique d'apprentissage permettant de diminuer la fonction de coût f qui est, comme déjà indiqué, croissante en fonction de la distance d entre le vecteur **x** appliqué en entrée du réseau de neurones artificiels 20 et le vecteur $\hat{h}$ produit en sortie du réseau de neurones artificiels 20. Il s'agit donc d'une étape d'optimisation des coefficients (ou éléments) de la matrice **W** de sorte que la fonction de coût f diminue.

Comme déjà indiqué, lorsque des vecteurs $\mathbf{b_1}$ et/ou $\mathbf{b_2}$ sont utilisés au sein du réseau de neurones artificiels 20, les éléments de ces vecteurs $\mathbf{b_1}$, $\mathbf{b_2}$ peuvent simultanément être mis à jour au cours de l'étape E14.

Cette étape E14 est ici mise en oeuvre par le module de mise à jour 16.

Le réseau de neurones artificiels 20 (c'est-à-dire en pratique la matrice **W**) donnera donc une estimation affinée des valeurs représentatives de la transmission à travers les canaux de communication $C_1$, $C_i$, $C_j$, $C_N$ lors des futures applications d'un vecteur x en entrée du réseau de neurones artificiels 20.

Le procédé peut en effet boucler à l'étape E6 comme représenté en figure 4 pour traitement d'une autre séquence pilote.

La figure 5 représente schématiquement une variante envisageable pour le réseau de neurones artificiels 20.

Cette variante est basée sur la prise en compte de plusieurs chemins (ici K chemins) pour les différents canaux de communication $C_1$, $C_i$, $C_j$, $C_N$ de sorte que le vecteur comprenant les valeurs représentatives de la transmission à travers les différents canaux de communication $C_1$, $C_i$, $C_j$, $C_N$ peut s'écrire :

$$\sum_{k=1}^{K} \beta_k \mathbf{e}(\theta_k)$$

où $\beta_k$ et $\theta_k$ sont respectivement un gain et un angle d'azimut associés à un chemin particulier.

On pourra se référer par exemple à ce sujet à l'article "Matching pursuits with time-frequency dictionaries", de S. Mallat et Z. Zhang, in IEEE Transactions on Signal Processing, vol. 41, n° 12, pp. 3397-3415, déc. 1993.

Comme visible sur la figure 5, le réseau de neurones artificiels permettant de réaliser l'estimation de canal dans ce contexte comprend K parties $P_1$, $P_2$, $P_k$, ..., $P_k$ réalisée chacune comme représenté sur la figure 6.

Chaque partie $P_k$ du réseau de neurones artificiels comprend des colonnes de coefficients de pondération et est configurée pour déterminer (parmi ces colonnes de coefficients de pondération) la colonne de coefficients de pondération la mieux corrélée avec un vecteur $\mathbf{r_{k-1}}$ reçu en entrée de cette partie $P_k$ du réseau de neurones artificiels et pour produire un vecteur colinéaire à la colonne la mieux corrélée.

Pour ce faire, chaque partie $P_k$ du réseau de neurones artificiels présente une structure du même type que celle de la figure 3, comme expliqué ci-dessous. On remarque à cet égard que les colonnes de coefficients de pondération utilisées (qui forment la matrice $\mathbf{W}$ comme déjà indiqué) sont les mêmes dans les différentes parties $P_k$ du réseau de neurones artificiels. Autrement dit, comme expliqué ci-dessous, on utilise la même matrice $\mathbf{W}$ dans les différentes parties $P_k$ du réseau de neurones artificiels. En variante toutefois, les colonnes de coefficients de pondération utilisées pourraient être spécifiques à chaque partie $P_k$ du réseau de neurones artificiels (en étant éventuellement initialisées par les mêmes colonnes pour les différentes parties $P_k$ comme décrit ci-dessus à l'étape E4, mais en évoluant possiblement de manière différente lors de la phase d'apprentissage).

Chaque partie $P_k$ comprend donc ici :

- une première couche 32 conçue pour appliquer au vecteur $\mathbf{r_{k-1}}$ reçu en entrée de la partie $P_k$ une multiplication (à gauche) par la matrice $\mathbf{W^H}$ (cette première couche 32 étant donc dans le présent exemple identique à la première couche 22 décrite ci-dessus) ;

- une seconde couche 34 conçue pour conserver uniquement l'élément (ou coefficient) de plus grand module dans le vecteur reçu de la première couche 32 (c'est-à-dire dans le vecteur $\mathbf{W^H r_{k-1}}$) et pour annuler tous les autres éléments de ce même vecteur (cette seconde couche 34 étant donc dans le présent exemple identique à la seconde couche 24 décrite ci-dessus) ;

- une troisième couche 36 conçue pour appliquer au vecteur reçu de la seconde couche 34 une multiplication (à gauche) par la matrice $\mathbf{W}$ et ainsi pour produire en sortie un vecteur colinéaire à la colonne de coefficients de pondération la mieux corrélée au vecteur $\mathbf{r_{k-1}}$ reçu en entrée de la partie $P_k$ (cette troisième couche 36 étant donc dans le présent exemple identique à la troisième couche 26 décrite ci-dessus).

Les première, seconde et troisième couches 32, 34, 36 étant respectivement identiques ici aux première, seconde et troisième couches 22, 24, 26 décrites plus haut en référence à la figure 3, on pourra se référer à la description de la figure 3 pour tout autre détail concernant les première, seconde et troisième couches 32, 34, 36, notamment en ce qui concerne l'utilisation de vecteurs $\mathbf{b_1}$ et/ou $\mathbf{b_2}$.

Chaque partie $P_k$ du réseau de neurones artificiels est en outre conçue pour produire en sortie un vecteur $\mathbf{r_k}$ égal à la différence entre le vecteur $\mathbf{r_{k-1}}$ reçu en entrée de la partie $P_k$ concerné et le vecteur colinéaire susmentionné (produit en sortie de la troisième couche 36), ici grâce à un élément de combinaison 38 visible en figure 6.

Comme visible en figure 5, le vecteur $\mathbf{x}$ reçu en entrée du réseau de neurones artificiels est appliqué en entrée de la (première) partie $P_1$ du réseau de neurones artificiels. Autrement dit, avec les notations précédentes, on a : $\mathbf{r_0} = \mathbf{x}$.

Chaque vecteur $\mathbf{r_k}$ produit en sortie d'une partie $P_k$ du réseau de neurones artificiels est par ailleurs appliqué en entrée de la partie suivante $P_{k+1}$ (pour k allant de 1 à K-1).

Enfin, le vecteur $\mathbf{r_K}$ produit en sortie de la (dernière) partie $P_k$ du réseau de neurones artificiels est soustrait au vecteur $\mathbf{x}$ reçu en entrée du réseau de neurones artificiels (ici au moyen d'un élément de combinaison 40) de manière à obtenir le vecteur $\hat{\mathbf{h}}$ comprenant les valeurs estimées respectivement représentatives de la transmission à travers les canaux de communication $C_1$, $C_i$, $C_j$, $C_N$. Autrement dit, on

$$a : \hat{\mathbf{h}} = \mathbf{x} - \mathbf{r_K}.$$

Dans les différents modes de réalisation qui ont été décrits, l'invention permet d'obtenir une estimation de canal conforme au modèle physique dès le début du fonctionnement du dispositif d'estimation de canal, puis une estimation de canal de plus en plus proche du système réel grâce l'apprentissage du réseau de neurones artificiels 20.

L'invention permet ainsi tout d'abord de corriger un modèle physique (nécessairement imparfait), que l'imperfection soit due à des hypothèses simplificatrices ou à une connaissance partielle du système d'antennes (position et gain des antennes, directivité des antennes, couplages entre antennes, *etc.*).

L'invention permet aussi d'adapter les traitements d'estimation effectués par l'unité de communication (ici une station de base) à des changements dans la distribution des canaux (ici dans la cellule concernée du réseau de téléphonie mobile). Par exemple, si l'environnement de la cellule change, parce qu'un nouveau bâtiment se construit, que les arbres perdent leurs feuilles ou qu'un bus stationne dans l'environnement proche de la station de base, alors les coefficients du réseau de neurones artificiels vont s'adapter automatiquement et en temps réel à ces changements.

L'invention permet par ailleurs de détecter et de corriger les avaries potentielles de l'unité de communication (ici de la station de base). Par exemple, si lors de l'intervention d'un technicien ou à cause d'intempéries, une ou plusieurs antennes voient leur gain changer (voire s'annuler, auquel cas les antennes concernées sont hors service), alors la valeur de la fonction de coût utilisée par le réseau de neurones artificiels va brusquement augmenter, ce qui permettra de détecter l'incident, puis l'entraînement incrémental permettra de corriger automatiquement les coefficients du réseau de neurones artificiels pour s'adapter à cette nouvelle configuration.

L'invention a enfin un intérêt indirect pour les constructeurs d'antennes. En effet, savoir à l'avance que l'unité de communication (par exemple une station de base) pourra corriger elle-même un modèle physique permet de relâcher les contraintes de précision au moment de la construction des antennes. Il n'y a plus besoin de calibrer précisément les positions et gains des antennes a *priori* car cela peut être fait a *posteriori* au moment de l'utilisation des antennes par l'unité de communication (ici la station de base), qui réalise en quelque sorte une auto-calibration de son système d'antennes.

**Revendications**

1. Procédé d'estimation de canal dans un système de communication comprenant une pluralité de canaux de communication ($C_1$, $C_i$, $C_j$, $C_N$), à partir d'une pluralité de valeurs bruitées ($\xi_i$) respectivement représentatives de la transmission à travers lesdits canaux de communication ($C_1$, $C_i$, $C_j$, $C_N$), comprenant les étapes suivantes :

- sur la base d'un modèle physique du système de communication à au moins un paramètre ($\theta$), construction (E2) d'un ensemble de vecteurs ($\mathbf{e}(\theta)$) associés à une pluralité de valeurs dudit au moins un paramètre ($\theta$), un vecteur ($\mathbf{e}(\theta)$) associé à une valeur donnée dudit au moins un paramètre ($\theta$) comprenant des valeurs respectivement représentatives de la transmission à travers lesdits canaux de communication ($C_1$, $C_i$, $C_j$, $C_N$) selon ledit modèle physique pour ladite valeur donnée dudit au moins un paramètre ($\theta$) ;
- initialisation (E4), en fonction des vecteurs construits ($\mathbf{e}(\theta)$), de colonnes de coefficients de pondération définissant une partie au moins d'un réseau de neurones artificiels (20), ladite partie du réseau de neurones artificiels (20) étant configurée pour déterminer la colonne de coefficients de pondération la mieux corrélée avec un vecteur reçu en entrée du réseau de neurones artificiels (20) et pour produire en sortie un vecteur colinéaire à la colonne la mieux corrélée ;
- application (E10), en entrée de ladite partie du réseau de neurones artificiels, d'un vecteur ($\mathbf{x}$) déterminé en fonction desdites valeurs bruitées ($\xi_i$) de manière à produire en sortie du réseau de neurones artificiels (20) un vecteur ($\hat{\mathbf{h}}$) comprenant des valeurs estimées respectivement représentatives de la transmission à travers lesdits canaux de communication ($C_1$, $C_i$, $C_j$, $C_N$) ;
- mise à jour (E14) des coefficients de pondération de ladite partie du réseau de neurones artificiels (20) par une technique d'apprentissage diminuant une fonction de coût croissante en fonction d'une distance entre le vecteur ($\mathbf{x}$) appliqué en entrée du réseau de neurones artificiels (20) et le vecteur ($\hat{\mathbf{h}}$) produit en sortie du réseau de neurones artificiels (20).

2. Procédé d'estimation de canal selon la revendication 1, comprenant une pluralité d'étapes successives d'application de vecteur ($\mathbf{x}$) en entrée de ladite partie de réseau de neurones artificiels (20) et, pour chaque étape successive d'application, une étape correspondante de mise à jour (E14) des coefficients de pondération par ladite technique d'apprentissage.

3. Procédé d'estimation de canal selon la revendication 1 ou 2, dans lequel, à l'étape d'initialisation (E4), chaque colonne de coefficients de pondération est initialisée avec un vecteur produit d'une matrice de transformation d'un domaine des canaux de communication ($C_1$, $C_i$, $C_j$, $C_N$) à un domaine angulaire dual, et d'un vecteur ($\mathbf{e}(\theta)$) dudit ensemble.

4. Procédé d'estimation selon la revendication 3, dans lequel le vecteur (**x**) appliqué en entrée est obtenu par normalisation d'un vecteur comprenant lesdites valeurs bruitées ($\xi_i$) et multiplication de la matrice de transformation par le vecteur normalisé.

5. Procédé d'estimation de canal selon la revendication 1 ou 2, dans lequel, à l'étape d'initialisation (E4), chaque colonne de coefficients de pondération est initialisée avec un vecteur (**e**($\theta$)) dudit ensemble et dans lequel le vecteur (**x**) appliqué en entrée comprend lesdites valeurs bruitées ($\xi_i$).

6. Procédé d'estimation de canal selon l'une des revendications 1 à 5, dans lequel le réseau de neurones artificiels (20) comprend au moins une autre partie ($P_2$) configurée pour recevoir en entrée un vecteur (**$r_1$**) obtenu par différence entre le vecteur (**x**) appliqué en entrée de ladite partie du réseau de neurones artificiels et le vecteur produit en sortie de ladite partie du réseau de neurones artificiels, cette autre partie ($P_2$) du réseau de neurones artificiels (20) comprenant des colonnes d'autres coefficients de pondération et étant configurée pour déterminer la colonne desdits autres coefficients de pondération la mieux corrélée avec le vecteur (**$r_1$**) reçu en entrée de cette autre partie ($P_2$) du réseau de neurones artificiels (20) et pour produire un vecteur colinéaire à la colonne desdits autres coefficients la mieux corrélée.

7. Procédé d'estimation de canal selon l'une des revendications 1 à 6, dans lequel ledit modèle physique est basé sur une pluralité de paramètres et dans lequel l'ensemble de vecteurs construits comprend des vecteurs respectivement associés à une pluralité de multiplets distincts de valeurs desdits paramètres.

8. Procédé d'estimation de canal selon l'une des revendications 1 à 7, dans lequel le paramètre est un angle ($\theta$) relativement à un réseau d'antennes (8) du système de communication et dans lequel les vecteurs construits (**e**($\theta$)) comprennent au moins une valeur représentative de la transmission et obtenue en fonction d'une valeur dudit angle ($\theta$).

9. Procédé d'estimation de canal selon l'une des revendications 1 à 8, dans lequel lesdites valeurs bruitées ($\xi_i$) sont obtenues par réception (E6) de séquences pilotes via les canaux de communication ($C_1$, $C_i$, $C_j$, $C_N$) et traitement desdites séquences pilotes reçues.

10. Dispositif d'estimation de canal pour un système de communication comprenant une pluralité de canaux de communication ($C_1$, $C_i$, $C_j$, $C_N$), comprenant :

- un module de construction (10) conçu pour construire, sur la base d'un modèle physique du système de communication à au moins un paramètre ($\theta$), un ensemble de vecteurs (**e**($\theta$)) associés à une pluralité de valeurs dudit au moins un paramètre ($\theta$) de telle sorte qu'un vecteur (**e**($\theta$)) associé à une valeur donnée dudit au moins un paramètre ($\theta$) comprenne des valeurs respectivement représentatives de la transmission à travers lesdits canaux de communication ($C_1$, $C_i$, $C_j$, $C_N$) selon ledit modèle physique pour ladite valeur donnée dudit au moins un paramètre ($\theta$) ;

- un module d'initialisation (12) conçu pour initialiser, en fonction des vecteurs construits (**e**($\theta$)), des colonnes de coefficients de pondération définissant une partie au moins d'un réseau de neurones artificiels (20), ladite partie du réseau de neurones artificiels (20) étant configurée pour déterminer la colonne de coefficients de pondération la mieux corrélée avec un vecteur reçu en entrée du réseau de neurones artificiels et pour produire en sortie un vecteur colinéaire à la colonne la mieux corrélée ;

- un module d'application (14) conçu pour appliquer, en entrée de ladite partie du réseau de neurones artificiels (20), un vecteur (**x**) déterminé en fonction de valeurs bruitées ($\xi_i$) respectivement représentatives de la transmission à travers lesdits canaux de communication ($C_1$, $C_i$, $C_j$, $C_N$), de manière à produire en sortie du réseau de neurones artificiels (20) un vecteur ($\hat{\mathbf{h}}$) comprenant des valeurs estimées respectivement représentatives de la transmission à travers lesdits canaux de communication ($C_1$, $C_i$, $C_j$, $C_N$) ;

- un module de mise à jour (16) des coefficients de pondération de ladite partie du réseau de neurones artificiels (20) par une technique d'apprentissage diminuant une fonction de coût croissante en fonction d'une distance entre le vecteur (**x**) appliqué en entrée du réseau de neurones artificiels (20) et le vecteur ($\hat{\mathbf{h}}$) produit en sortie du réseau de neurones artificiels (20).

11. Programme d'ordinateur comprenant des instructions exécutables par un processeur et conçues pour mettre en oeuvre un procédé selon l'une des revendications 1 à 9 lorsque ces instructions sont exécutées par le processeur.

**Patentansprüche**

1. Verfahren zur Kanalschätzung in einem Kommunikationssystem mit einer Anzahl Kommunikationskanälen ($C_1$, $C_i$, $C_j$, $C_N$), von einer Anzahl verrauschter Werte ($\xi_i$) ausgehend, die jeweils für die Übertragung über diese Kommunikationskanäle ($C_1$, $C_i$, $C_j$,

$C_N$) kennzeichnend sind, mit den folgenden Schritten:

- auf der Grundlage eines physikalischen Modells des Kommunikationssystems mit mindestens einem Parameter ($\theta$), Bilden (E2) einer Gesamtheit von einer Anzahl Werte des mindestens einen Parameters ($\Theta$) zugeordneten Vektoren ($\mathbf{e}(\theta)$), wobei ein einem gegebenen Wert des mindestens einen Parameters ($\Theta$) zugeordneter Vektor ($\mathbf{e}(\theta)$) Werte aufweist, die jeweils für die Übertragung über diese Kommunikationskanäle ($C_1$, $C_i$, $C_j$, $C_N$) gemäß dem physikalischen Modell für den gegebenen Wert des mindestens einen Parameters ($\Theta$) kennzeichnend sind;

- in Abhängigkeit von den gebildeten Vektoren ($\mathbf{e}(\theta)$), Initialisieren (E4) von Spalten von Gewichtungskoeffizienten, die mindestens einen Teil eines Netzes aus künstlichen Neuronen (20) definieren, wobei der Teil des Netzes aus künstlichen Neuronen (20) dazu ausgelegt ist, die am besten mit einem am Eingang des Netzes aus künstlichen Neuronen (20) empfangenen Vektor korrelierte Spalte von Gewichtungskoeffizienten zu bestimmen und am Ausgang einen zu der am besten korrelierten Spalte kollinearen Vektor zu bilden;

- am Eingang des besagten Teils des Netzes aus künstlichen Neuronen, Eingeben (E10) eines Vektors ($x$), der in Abhängigkeit von den verrauschten Werten ($\xi_i$) bestimmt ist, um am Ausgang des Netzes von künstlichen Neuronen (20) einen Vektor ($\hat{h}$) zu bilden, der geschätzte Werte aufweist, die jeweils für die Übertragung über diese Kommunikationskanäle ($C_1$, $C_i$, $C_j$, $C_N$) kennzeichnend sind;

- Aktualisieren (E14) der Gewichtungskoeffizienten des besagten Teils des Netzes aus künstlichen Neuronen (20) durch eine Lerntechnik, die eine Kostenfunktion reduziert, die in Abhängigkeit von einer Entfernung zwischen dem am Eingang des Netzes aus künstlichen Neuronen (20) eingegebenen Vektor ($x$) und dem am Ausgang des Netzes aus künstlichen Neuronen (20) gebildeten Vektor ($\hat{h}$) steigt.

2. Verfahren zur Kanalschätzung gemäß Anspruch 1 mit einer Anzahl aufeinanderfolgender Schritte des Eingebens eines Vektors ($x$) am Eingang des besagten Teils des Netzes aus künstlichen Neuronen (20) und, für jeden der aufeinanderfolgenden Schritte des Eingebens, einem entsprechenden Schritt des Aktualisierens (E14) der Gewichtungskoeffizienten durch die besagte Lerntechnik.

3. Verfahren zur Kanalschätzung gemäß Anspruch 1 oder 2, bei dem beim Initialisierungsschritt (E4) jede Spalte von Gewichtungskoeffizienten mit einem Vektor initialisiert wird, der der Produkt von einer Umwandlungsmatrix eines Bereichs der Kommunikationskanäle ($C_1$, $C_i$, $C_j$, $C_N$) in einen dualen Winkelbereich und von einem Vektor ($\mathbf{e}(\theta)$) der Gesamtheit ist.

4. Verfahren zur Kanalschätzung gemäß Anspruch 3, bei dem der am Eingang eingegebene Vektor ($\mathbf{x}$) durch Normalisierung eines Vektors, der die besagten verrauschten Werte ($\xi_i$) aufweist, und Multiplikation der Umwandlungsmatrix mit dem normalisierten Vektor erhalten wird.

5. Verfahren zur Kanalschätzung gemäß Anspruch 1 oder 2, bei dem beim Initialisierungsschritt (E4) jede Spalte von Gewichtungskoeffizienten mit einem Vektor ($\mathbf{e}(\theta)$) der besagten Gesamtheit initialisiert wird und bei dem der am Eingang eingegebene Vektor ($\mathbf{x}$) die verrauschten Werte ($\xi_i$) aufweist.

6. Verfahren zur Kanalschätzung gemäß einem der Ansprüche 1 bis 5, bei dem das Netz aus künstlichen Neuronen (20) mindestens einen weiteren Teil ($P_2$) aufweist, der dazu ausgelegt ist, am Eingang einen Vektor ($\mathbf{r_1}$) zu empfangen, der durch die Differenz zwischen dem am Eingang des besagten Teils des Netzes aus künstlichen Neuronen eingegebenen Vektor ($\mathbf{x}$) und dem am Ausgang des besagten Teils des Netzes aus künstlichen Neuronen gebildeten Vektor erhalten worden ist, wobei dieser weitere Teil ($P_2$) des Netzes aus künstlichen Neuronen (20) Spalten weiterer Gewichtungskoeffizienten aufweist und dazu ausgelegt ist, die Spalte der weiteren Gewichtungskoeffizienten zu bestimmen, die am besten mit dem am Eingang des weiteren Teils ($P_2$) empfangenen Vektors ($\mathbf{r_1}$) korreliert ist, und einen zur Spalte der am besten korrelierten weiteren Koeffizienten kollinearen Vektor zu bilden.

7. Verfahren zur Kanalschätzung gemäß einem der Ansprüche 1 bis 6, bei dem das physikalische Modell auf einer Anzahl Parameter basiert und bei dem die Gesamtheit der gebildeten Vektoren Vektoren aufweist, die jeweils einer Anzahl einzelner Tupel von Werten der besagten Parameter zugeordnet sind.

8. Verfahren zur Kanalschätzung gemäß einem der Ansprüche 1 bis 7, bei dem der Parameter ein Winkel ($\Theta$) in Bezug auf ein Antennennetz (8) des Kommunikationsnetzes ist und bei dem die erhaltenen Vektoren ($\mathbf{e}(\theta)$) mindestens einen Wert aufweisen, der für die Übertragung kennzeichnend ist und in Abhängigkeit von einem Wert des besagten Winkels ($\Theta$) erhalten worden ist.

9. Verfahren zur Kanalschätzung gemäß einem der Ansprüche 1 bis 8, bei dem die besagten verrausch-

ten Werte ($\xi_i$) durch Empfangen (E6) von Steuerungssequenzen über die Kommunikationskanäle ($C_1$, $C_i$, $C_j$, $C_N$) und Verarbeiten der empfangenen Steuerungssequenzen erhalten werden.

10. Vorrichtung zur Kanalschätzung für ein Kommunikationssystem mit einer Anzahl Kommunikationskanälen ($C_1$, $C_i$, $C_j$, $C_N$) mit

- einem Erzeugungsmodul (10), das dazu ausgelegt ist, auf der Grundlage eines physikalischen Modells des Kommunikationssystems mit mindestens einem Parameter ($\theta$), eine Gesamtheit von einer Anzahl Werten des mindestens einen Parameters ($\Theta$) zugeordneten Vektoren ($\mathbf{e}(\theta)$) zu bilden, wobei ein einem gegebenen Wert des mindestens einen Parameters ($\Theta$) zugeordneter Vektor ($\mathbf{e}(\theta)$) Werte aufweist, die jeweils für die Übertragung über diese Kommunikationskanäle ($C_1$, $C_i$, $C_j$, $C_N$) gemäß dem physikalischen Modell für den gegebenen Wert des mindestens einen Parameters ($\Theta$) kennzeichnend sind;
- einem Initialisierungsmodul (12), das dazu ausgelegt ist, in Abhängigkeit von den gebildeten Vektoren ($\mathbf{e}(\theta)$), Spalten von Gewichtungskoeffizienten zu initialisieren, die mindestens einen Teil eines Netzes aus künstlichen Neuronen (20) definieren, wobei der Teil des Netzes aus künstlichen Neuronen (20) dazu ausgelegt ist, die am besten mit einem am Eingang des Netzes aus künstlichen Neuronen (20) empfangenen Vektor korrelierte Spalte von Gewichtungskoeffizienten zu bestimmen und am Ausgang einen zu der am besten korrelierten Spalte kollinearen Vektor zu bilden;
- einem Eingabemodul (14), das dazu ausgelegt ist, am Eingang des besagten Teils des Netzes aus künstlichen Neuronen (20) einen Vektor ($\mathbf{x}$) einzugeben, der in Abhängigkeit von verrauschten Werten ($\xi_i$) bestimmt ist, die jeweils für die Übertragung über diese Kommunikationskanäle ($C_1$, $C_i$, $C_j$, $C_N$) kennzeichnend sind, um am Ausgang des Netzes von künstlichen Neuronen (20) einen Vektor ($\hat{\mathbf{h}}$) zu bilden, der geschätzte Werte aufweist, die jeweils für die Übertragung über diese Kommunikationskanäle ($C_1$, $C_i$, $C_j$, $C_N$) kennzeichnend sind;
- einem Modul (16) für die Aktualisierung der Gewichtungskoeffizienten des besagten Teils des Netzes aus künstlichen Neuronen (20) durch eine Lerntechnik, die eine Kostenfunktion reduziert, die in Abhängigkeit von einer Entfernung zwischen dem am Eingang des Netzes aus künstlichen Neuronen (20) angelegten Vektor ($\mathbf{x}$) und dem am Ausgang des Netzes aus künstlichen Neuronen (20) gebildeten Vektor ($\hat{\mathbf{h}}$) steigt.

11. Computerprogramm mit Anweisungen, die durch einen Prozessor ausführbar sind und dazu ausgelegt sind, ein Verfahren zur Kanalschätzung gemäß einem der Ansprüche 1 bis 9 durchzuführen, wenn diese Anweisungen durch den Prozessor ausgeführt werden.

**Claims**

1. A method for estimating a channel in a communication system comprising a plurality of communication channels ($C_1$, $C_i$, $C_j$, $C_N$), from a plurality of noisy values respectively representative ($\xi_i$) of the transmission through said communication channels ($C_1$, $C_i$, $C_j$, $C_N$), comprising the following steps:

- based on a physical model of the communication system having at least one parameter ($\theta$), constructing (E2) a set of vectors ($\mathbf{e}(\theta)$) associated with a plurality of values of said at least one parameter ($\theta$), a vector ($\mathbf{e}(\theta)$) associated with a given value of said at least on parameter ($\theta$) comprising values respectively representative of the transmission through said communication channels ($C_1$, $C_i$, $C_j$, $C_N$) according to said physical model for said given value of said at least one parameter ($\theta$);
- initializing (E4), as a function of the constructed vectors ($\mathbf{e}(\theta)$), columns of weighting coefficients defining a part at least of an artificial neural network (20), said part of artificial neural network (20) being configured to determine the column of weighting coefficients that is the best correlated with a vector received as an input of the artificial neural network (20) and to produce as an output a vector that is colinear with the best correlated column;
- applying (E10), as an input of said part of the artificial neural network, a vector ($\mathbf{x}$) determined as a function of said noisy values ($\xi_i$) in such a way as to produce as an output of the artificial neural network (20) a vector ($\hat{\mathbf{h}}$) comprising estimated values respectively representative of the transmission through said communication channels ($C_1$, $C_i$, $C_j$, $C_N$);
- updating (E14) the weighting coefficients of said part of the artificial neural network (20) by a learning technique reducing a cost function that increases as a function a distance between the vector ($\mathbf{x}$) applied as an input of the artificial neural network (20) and the vector ($\hat{\mathbf{h}}$) produced as an output of the artificial neural network (20).

2. The channel estimation method according to claim 1, comprising a plurality of successive steps of application of vector ($\mathbf{x}$) as an input of said part of artificial neural network (20) and, for each successive step of application, a corresponding step of updating (E14) the weighting coefficients by said learning technique.

3. The channel estimation method according to claim 1 or 2, wherein, at the initialization step (E4), each column of weighting coefficients is initialized with a vector product of a transform matrix for transformation from a domain of the communication channel $(C_1, C_i, C_j, C_N)$ to a dual angular domain, with one vector ($\mathbf{e}(\theta)$) of said set.

4. The channel estimation method according to claim 3, wherein the vector ($\mathbf{x}$) applied as an input is obtained by normalizing a vector comprising said noisy values ($\xi_i$) and multiplying the transform matrix by the normalized vector.

5. The channel estimation method according to claim 1 or 2, wherein, at the initialization step (E4), each column of weighting coefficients is initialized with a vector ($\mathbf{e}(\theta)$) of said set and wherein the vector ($\mathbf{x}$) applied as an input comprises said noisy values ($\xi_i$).

6. The channel estimation method according to one of claims 1 to 5, wherein the artificial neural network (20) comprises at least another part ($P_2$) configured to receive as an input a vector ($\mathbf{r_1}$) obtained by difference between the vector ($\mathbf{x}$) applied as an input of said part of the artificial neural network and the vector produced as the output of said part of the artificial neural network, this other part ($P_2$) of the artificial neural network (20) comprising columns of other weighting coefficients and being configured to determine the column of said other weighting coefficients that is the best correlated with the vector ($\mathbf{r_1}$) received as an input of this other part ($P_2$) of the artificial neural network (20) and to produce a vector that is colinear with the best correlated column of said other coefficients.

7. The channel estimation method according to one of claims 1 to 6, wherein said physical model is based on a plurality of parameters and wherein the set of constructed vectors comprises vectors respectively associated with a plurality of distinct tuples of values of said parameters.

8. The channel estimation method according to one of claims 1 to 7, wherein the parameter is an angle ($\theta$) with respect to an array of antennas (8) of the communication system and wherein the constructed vectors ($\mathbf{e}(\theta)$) comprise at least one value representative of the transmission and obtained as a function of a value of said angle ($\theta$).

9. The channel estimation method according to one of claims 1 to 8, wherein said noisy values ($\xi_i$) are obtained by receipt (E6) of pilot sequences via the communication channels $(C_1, C_i, C_j, C_N)$ and processing of said received pilot sequences.

10. A channel estimation device for a communication system comprising a plurality of communication channels $(C_1, C_i, C_j, C_N)$, comprising:

    - a construction module (10) adapted to construct, based on a physical model of the communication system having at least one parameter ($\theta$), a set of vectors ($\mathbf{e}(\theta)$) associated with a plurality of values of said at least one parameter ($\theta$) in such a way that a vector ($\mathbf{e}(\theta)$) associated with a given value of said at least one parameter ($\theta$) comprise values respectively representative of the transmission through said communication channels $(C_1, C_i, C_j, C_N)$ according to said physical model for said given value of said at least one parameter ($\theta$);
    - an initialization module (12) adapted to initialize, as a function of the constructed vectors ($\mathbf{e}(\theta)$), columns of weighting coefficients defining a part at least of an artificial neural network (20), said part of the artificial neural network (20) being configured to determine the column of weighting coefficients that is the best correlated with a vector received at the input of the artificial neural network and to produce as an output a vector that is colinear with the best correlated column;
    - an application module (14) adapted to apply, as an input of said part of the artificial neural network (20), a vector ($\mathbf{x}$) determined as a function of noisy values ($\xi_i$) respectively representative of the transmission through said communication channels $(C_1, C_i, C_j, C_N)$, in such a way as to produce as an output of the artificial neural network (20) a vector ($\hat{\mathbf{h}}$) comprising estimated values respectively representative of the transmission through said communication channels $(C_1, C_i, C_j, C_N)$;
    - a module for updating (16) the weighting coefficients of said part of the artificial neural network (20) by a learning technique reducing a cost function that increases as a function a distance between the vector ($\mathbf{x}$) applied as an input of the artificial neural network (20) and the vector ($\hat{\mathbf{h}}$) produced as an output of the artificial neural network (20).

11. A computer program comprising instructions executable by a processor and adapted to implement a method according to any one of claims 1 to 9 when these instructions are executed by the processor.

# Fig.1

# Fig.2

# Fig.3

# Fig.4

E2 — CONSTR.

E4 — INIT.

E6 — REC.PILOT.

E8 — PILOT → $\xi_i$

E10 — APPL.$\mathbf{x}$

E12 — EST.$\hat{\mathbf{h}}$

E14 — OPTIM.$\mathbf{W}$

# Fig.5

$$\mathbf{x} \xrightarrow{\mathbf{r}_0} \boxed{P_1} \xrightarrow{\mathbf{r}_1} \boxed{P_2} \xrightarrow{\mathbf{r}_{K-1}} \boxed{P_K} \xrightarrow{\mathbf{r}_K} \bigoplus_{40} \rightarrow \hat{\mathbf{h}}$$

$P_k$

# Fig.6

$$\mathbf{r}_{k-1} \rightarrow \boxed{\mathbf{W}^H}_{32} \rightarrow \boxed{HT_1}_{34} \rightarrow \boxed{\mathbf{W}}_{36} \rightarrow \bigoplus_{38} \xrightarrow{\mathbf{r}_k}$$

$P_k$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **HENGTAO HE ; CHAO-KAI WEN ; SHI JIN ; GEOFFREY YE LI.** Deep Learning-based Channel Estimation for Beamspace mmWave Massive MIMO Systems. *IEEE Wireless Communication Letters,* 2018, vol. 7 (5), 852-855
- Deep Learning Explorations in Wireless Channel Encoders. **BHATIAVANDANA et al.** 2019 PHOTONICS & ELECTROMAGNETICS RESEARCH SYMPOSIUM - FALL (PIERS - FALL). IEEE, 17 Décembre 2019
- Deep Learning and Channel Estimation. **THAKKAR KARAN et al.** 2020 6TH INTERNATIONAL CONFERENCE ON ADVANCED COMPUTING AND COMMUNICATION SYSTEMS (ICACCS). IEEE, 06 Mars 2020
- **A. MAKHZANI ; B.FREY.** K-sparse autoencoders. *arXiv :1312.5663,* 2013
- **LEUNG, H. ; HAYKIN, S.** The complex backpropagation algorithm. *IEEE Transactions on signal processing,* 1991, vol. 39 (9), 2101-2104
- Large-scale machine learning with stochastic gradient descent. **L. BOTTOU.** Proceedings of COMPSTAT'2010. Springer, 2010, 177-186
- **S. MALLAT ; Z. ZHANG.** Matching pursuits with time-frequency dictionaries. *IEEE Transactions on Signal Processing,* Décembre 1993, vol. 41 (12), 3397-3415